(19) Europäisches Patentamt
European Patent Office
Office européen des brevets

(11) **EP 3 819 026 A1**

(12) **EUROPEAN PATENT APPLICATION**

(43) Date of publication:
**12.05.2021 Bulletin 2021/19**

(51) Int Cl.:
**B01J 20/06** (2006.01)      **B01J 20/22** (2006.01)
**B01J 20/28** (2006.01)      **B01J 20/30** (2006.01)
**C02F 1/28** (2006.01)

(21) Application number: **19382968.6**

(22) Date of filing: **06.11.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Fundació Institut Català de Nanociència i
  Nanotecnologia (ICN2)**
  **08193 Bellaterra (ES)**
• **Institució Catalana De Recerca I
  Estudis Avançats (ICREA)**
  **08010 Barcelona (ES)**
• **Fundació Hospital Universitari Vall d'Hebron -
  Institut de Recerca**
  **08035 Barcelona (ES)**

(72) Inventors:
• **Maspoch Comamala, Daniel**
  **08197 VALLDOREIX (ES)**
• **Imaz, Inhar**
  **08240 MANRESA (ES)**
• **Franco Puntes, Víctor**
  **08028 BARCELONA (ES)**
• **Gómez Bastús, Neus**
  **08172 SANT CUGAT DEL VALLÈS (ES)**
• **Boix I Soler, Gerard**
  **08195 SANT CUGAT DEL VALLÈS (ES)**

(74) Representative: **ZBM Patents - Zea, Barlocci &
Markvardsen**
**Rambla Catalunya, 123**
**08008 Barcelona (ES)**

(54) **WATER PURIFICATION METHOD**

(57)     The present invention refers to a process for removing contaminants either from water or an aqueous solution comprising: i) contacting either the water or the aqueous solution with a composite material comprising metal nanoparticles entrapped in the pores of agglomerated Zr-based MOF crystals, and ii) recovering the treated water or aqueous solution. The invention also refers to a composite material comprising $CeO_2$ nanoparticles entrapped in the pores of agglomerated mercapto-functionalized Zr-benzene-1,4-dicarboxylic acid crystals and an absorbing material, preferably a membrane, filter or sponge, comprising said composite.

EP 3 819 026 A1

# EP 3 819 026 A1

## Description

The project leading to the present application has received funding from the European Research Council (ERC) under the European Union's Horizon 2020 research and innovation programme (grant agreement No 862093).

## Technical Field

The present invention is related to the field of water purification. The invention provides a process for removing contaminants from polluted water using nanoparticles supported on metal organic frameworks.

## Background Art

Water pollution is one of the main causes of health disorders worldwide. The increase in industrial activity, especially in developing countries, often involves the contamination of water with soluble toxic pollutants that can be easily accumulated in organisms and humans. Particularly, exposure to heavy metals such as arsenic, cadmium, chromium, lead and mercury, poses a considerable risk to human health even at trace levels.

Among the existing strategies for removal of heavy metal from water, chemical precipitation is one of the more widely extended methods, especially in industry wastewater. However, it has limitations in the treatment of low concentration contaminated water, which makes especially convenient to combine it with other treatment techniques. Here, adsorption is regarded as a benchmark method due to its simplicity, versatility, cost efficiency and effectivity. Some common adsorbents (e.g. activated carbon, zeolites, clay minerals, natural fibers) have been studied in adsorptive removal of heavy metal ions but these materials usually suffer from one or more drawbacks such as limited regeneration, slow sorption kinetics, relatively low thermal and chemical stability or limited selectivity. Inorganic nanoparticles have also been thoroughly studied for their adsorption of heavy metal pollutants due to their high activity and specificity. However, one of the main drawbacks of inorganic nanoparticles is their tendency to aggregate, which significantly affects their adsorption efficiency.

There is therefore the need of providing new adsorbent materials to remove pollutants, in particular, heavy metals, from water that overcome the deficiencies mentioned above.

## Summary of Invention

The inventors have developed a super-porous composite material with high adsorption capabilities for a wide variety of water contaminants and without the drawbacks mentioned above.

Thus, a first aspect of the present disclosure provides a process for removing contaminants either from water or an aqueous solution comprising:

> i) contacting either the water or the aqueous solution with a composite material comprising metal nanoparticles entrapped in the pores of agglomerated Zr-based MOF crystals, and
> ii) recovering the treated water or aqueous solution.

The method of the invention may be used in water purification. It allows for removal of water contaminants that are present in the water at high concentrations but also those that, as certain heavy metals, are found in very low concentrations and are hard to eliminate. It is noted that some contaminants, such as certain heavy metals, are environmentally very dangerous despite them being found in low concentrations.

The process of the invention, thanks to the surprising properties of the composite material, also has the advantage of removing a wide variety of contaminants. For example, most common environmentally harmful heavy metals may be removed by using the same composite material. This high versatility is highly convenient for industrial applications.

Moreover, the composite materials described herein not only possess a very high adsorption capacity but also have a surprisingly high durability. The composite materials described are highly resistant to degradation and maintain their adsorptive capabilities for long periods. Once finally saturated or clogged, regeneration of the composite material to (desorption of the absorbed contaminants) may be easily achieved by treating with slightly acidic aqueous solution.

All the above properties, high adsorption capability, versatility, endurance, regeneration, are effectively shown in by the examples of the present application. The examples below also show that the composite materials of the invention have been successfully incorporated into a continuous-flow cleaning system in the form of a packed powder column capable of remediating a stream of water without previous treatments. Thus, the method of the invention may be performed in a continuous flow, which implies a great advantage for water purification and many other applications.

A second aspect of the invention provides a composite material comprising $CeO_2$ nanoparticles entrapped in the pores of agglomerated mercapto-functionalized Zr-benzene-1,4-dicarboxylic acid crystals.

The nanocomposites of the invention may be included in state of the art industrial equipment for water cleansing or purification. In order to remove water contaminants, such equipment often comprise absorbent materials like filters or membranes to which the composite material may be conveniently added. Thus, absorbing materials, such as membranes, filters or sponges, containing the composite materials of the invention are also envisaged.

A third aspect of the invention provides an absorbing material, such as a membrane, filter or sponge, comprising the composite material of the second aspect of the invention.

The invention refers to use of a composite material comprising metal nanoparticles entrapped in the pores of agglomerated Zr-based MOF crystals for removing contaminants either from water or an aqueous solution. The invention also refers to use of an absorbing material, such as a membrane, filter or sponge, comprising said composite material.

## Brief Description of Drawings

Figure 1. (a) Schematic representation of the continuous-flow-spray-drying synthesis of composite materials and (b) FESEM (top) and TEM (bottom) imaging of the composites.

Figure 2. Metal ion adsorption by the studied materials UiO-66 (cyan), UiO-66@$CeO_2$ (blue), UiO-66(SH)$_2$ (yellow) and UiO-66-(SH)$_2$@$CeO_2$. Metal concentration for all pollutants before adsorption was 100 ppb and adsorption was carried out with 30 mL of solutions and 1 mg of material for 3 hours. The adsorptions were all performed at pH=5.

Figure 3. Adsorption of the heavy metal pollutants of the Bone and Buringanga rivers at their natural pH. UiO-66 (cyan), UiO-66@$CeO_2$ (blue), UiO-66(SH)$_2$ (yellow) and UiO-66-(SH)2@$CeO_2$. The adsorption was carried out with 30 mL of solutions, 1 mg of material and 3 hours uptake. Dash line indicates the necessary adsorption to lower the concentration of each ion below the W.H.O. standards.

Figure 4 (a) Photograph of the continuous flow packed powder column setup and (b) adsorption the continuous flow packed powder column after filtering 30ml of sample containing 100 ppb of each studied metal at a flow of 1.3 mL/min

## Detailed description of the invention

The present invention is useful for purification of water and, in particular, refers to a process for removing contaminants either from water or an aqueous solution. The method comprises contacting the contaminated water or the aqueous solution with a composite material comprising metal nanoparticles entrapped in the pores of agglomerated Zr-based MOF crystals.

The term "purification" is to be interpreted broadly and means any removal of harmful compounds and/or other compounds not tolerated in the water. The term contaminant is understood, accordingly, as harmful compounds and/or other compounds not tolerated in the water. The water or aqueous solution to be treated by the process of the present invention include industrial waste water, drinking water, urban waste water.

Contaminants may be inorganic and organic materials. Organic contaminants may derive, for example, from human waste, agriculture, farming or industrial and pharmaceutical activity. Non-limiting examples of organic contaminants are surfactants, pesticides, polycyclic compounds, cholesterol, or endocrine disrupting compounds (EDCs), such as e.g. endogenous hormones such as 17β-estradiol (E2), estrone (E1), estriol (E3), testosterone or dihydro testosterone; phyto and myco hormones such as β-sitosterol, genistein, daidzein or zeraleon; drugs such as 17α-ethinylestradiol (EE2), mestranol (ME), diethylstilbestrol (DES) and ibuprofen, and industrial chemicals such as 4-nonyl phenol (NP), 4-tert-octyl phenol (OP), bisphenol A (BPA), tributyltin (TBT), methylmercury, phthalates, PAK or PCB. Furthermore, antibiotics, like macrolides and sulphonamides are contaminants to be removed by the process of the present invention.

In particular embodiments, the contaminants to be removed by the present process are heavy metals. Although there is no specific definition of a heavy metal, literature has defined it as a naturally occurring element having a high atomic weight and high density which is five times greater than that of water. Many heavy metals are present in water derived from natural sources or as a result of human activity and some of them are toxic even at very low concentrations. Non-limiting examples of heavy metal contaminants are arsenic, lead, cadmium, nickel, mercury, chromium, cobalt, zinc, copper and selenium. In particular embodiments the contaminants to be removed by the process of the invention are heavy metals selected from the list consisting of arsenic, cadmium, chromium, mercury, copper and lead. In other particular embodiments the process of the invention is for removing arsenic, cadmium, chromium, mercury, copper and lead. In other particular embodiments the process of the invention is for removing heavy metals selected from the list consisting of As(III), As(V), Cd(II), Cr(III), Cr(VI), Cu(II), Pb(II) and Hg(II). In other particular embodiments the process of the invention is for removing As(III), As(V), Cd(II), Cr(III), Cr(VI), Cu(II), Pb(II) and Hg(II). In other particular embodiments the process of the invention is for removing Pb, Hg and Cu ions. As mentioned above, an advantage of the present purification process is that it may simultaneously remove several dangerous heavy metals from the waters or aqueous solutions.

The process of the invention comprises contacting the composite material with the contaminated water or aqueous solution. In some embodiments the water or aqueous solution comes directly from the source (e.g. river, sewage, ground water, reservoir), without any previous treatment. In other embodiments the water or aqueous solution has been treated or purified by conventional means before contacting with the composite material.

"Composite material" is understood, as commonly in the art, as a material made from two or more constituent materials with significantly different physical or chemical properties that, when combined, produce a material with characteristics different from the individual components. The individual components remain separate and distinct within the finished structure. The composite material of the present invention comprises metal nanoparticles entrapped in the pores of agglomerated Zr-based metal organic framework crystals.

"Metal nanoparticles" (herein also termed as Me-NPs) are known as submicron scale comprising pure metals (e.g., aluminium, copper, nickel, gold, silver, titanium, zinc, cerium) or their compounds (e.g., oxides, hydroxides, sulfides, phosphates, fluorides, and chlorides).

The Me-NPs according to the present invention have at least two dimensions in the nanoscale, preferably all three dimensions in the nanoscale, and may have different shapes and sizes, for example spheres, rods, discs, tubes and hemispheres. The Me-NPs of the invention have a diameter comprised in the range from 1 to 300 nm, particularly in the range from 2 to 200 nm, more particularly from 2 to 100 nm, even more particularly from 2 to 50. As used herein, the term "size" refers to a characteristic physical dimension. For example, in the most usual case of a Me-NP that is spherical or substantially spherical, the size of the Me-NP corresponds to the diameter of the sphere or the equivalent diameter of the quasi-sphere assimilated as a sphere. The state of the art provides appropriate techniques and equipment to calculate the diameter of particles. For example, the diameter can be measured using laser diffraction analysis. Alternatively, the size (diameter) may be calculated from their images, for example from Scanning or Transmission Electron Microscopy (SEM/TEM) images, by hand or applying an appropriate imaging software such as Gatan microscopy suite software. When referring to a set of particles as being of a particular size, it is contemplated that said particles can have a distribution of sizes around the specified size. Thus, for example, as used herein, a size of a set of Me-NPs can refer to a mode of a distribution of sizes, such as a peak size of the distribution of sizes.

In some embodiments, the metal nanoparticle comprises aluminium, copper, iron, manganese, nickel, titanium, zinc, zirconium, cadmium, strontium or a compound thereof. In some embodiments, the Me-NPs comprise aluminium oxide, copper oxide, iron oxide, manganese oxide, nickel oxide, titanium oxide, zinc oxide, zirconium oxide, hydrous ferric oxide, cadmium sulphide, iron sulphide, pyrite, pyrrhotite, strontium hydroxyapathite, magnetite or cerium oxide. In particular embodiments, the metal nanoparticle comprises cerium or a compound thereof, for example cerium dioxide ($CeO_2$). The Me-NPs may comprise a core of a first material covered by at least one shell of a second material, said second material comprising or consisting of a pure metal or a compound thereof as defined above. In some embodiments the whole Me-NPs is made of one metal or compound thereof as defined above.

Me-NPs may be synthesized by methods well known in the art. For example, Me-NPs comprising Cerium may be synthesized as described by Zhang et al in Journal of Applied Physics, Volume 95, Issue 8, pp. 4319-4326 (2004) or in Appl. Phys. Lett., Volume 80, pp. 127-129 (2002). In order to form the composite of the invention is convenient that the Me-Me-NPs have good dispersibility in the solvent, such that they do not aggregate before forming the composite material. To this end, the surface of the Me-NPs may be suitably functionalized with a surfactant. In one embodiment, the Me-NPs, such as $CeO_2$ NPs, are functionalized with polyvinyl pyrrolidone. This may be achieved by methods well known in the art.

"Metal Organic Frameworks", also termed MOFs, are crystalline compounds consisting of metal ions (clusters) coordinated to often rigid organic molecules (organic ligands) to form one-, two-, or three-dimensional structures that are highly porous. The MOFs suitable for the present invention are also highly porous MOFs, exhibiting very high specific surface area. The specific surface area of a MOF may be measured by the Brunauer-Emmett-Teller (also known as BET), which is well known to the skilled person. Further, the MOFs suitable for the present invention are water stable and preferably have functional groups displaying high binding affinity for water contaminants and, in particular, for heavy metal ions. MOFs complying with the mentioned features are, for example, Zr-based MOFs, which are particularly suitable for the composite to be used in the process of the invention. Zr-based MOFs, also called UiO family, are MOFs having Zr(iv) as coordinated metal ion and includes UiO-66 (Zr-benzene-1,4-dicarboxylic acid; CAS reference no. 1072413-80-9), UiO-67 (Zr-4,4'-biphenyldicarboxyilic acid), UiO-68 (Zr-terphenyldicarboxylic acid), NU-1100 (Zr-4-[2-[3,6,8.tris[2-(4-carboxyphenyl)ethynyl]-pyren-1-yl]ethynyl]benzoic acid), DUT-67 (Zr-tiphenedicarboxylic acid), and MOF-808 (Zr-1,3,5-benzenetricarboxylic acid). Other MOFs can be used for the present invention, so long as they have the properties mentioned above (high specific surface area, water stability and binding affinity for water contaminants). In a particular embodiment the MOF in the composite is UiO-66.

In some embodiments, the MOF in the composite of the invention is functionalized to incorporate additional chemical functional groups. "Functional group" is generally a specific group (moiety) of atoms or bonds within molecules that are responsible for the characteristic chemical reactions of those molecules. For example, the MOF may be functionalized to incorporate mercapto functional groups. "Mercapto" is understood as generally in the art as a functional group consisting of a sulfur bonded to a hydrogen atom (R-SH). The sulfhydryl group, also called a thiol, is indicated in chemistry nomenclature by "-thiol" as a suffix and "mercapto-" or "sulfanyl" as a prefix. In a particular embodiment, the MOF is a mercapto-functionalized Zr-MOF, more particularly mercapto-functionalized UiO-66, for example UiO-66-$(SH)_2$ (Zr-2,5-dimercaptoterephtalic acid). Functionalization of the MOF may be achieved by methods well known to the skilled person. Functionalization may take place before synthesis of the MOF, for example, by functionalizing the organic ligand or post-synthesis once the MOF has been formed.

In particular embodiments the composite comprises Cerium nanoparticles and a Zr-based MOF. In particular embodiments the composite comprises Cerium nanoparticles and mercapto-functionalized Zr-based MOF. In particular embodiments the composite comprises Cerium nanoparticles and UiO-66. In particular embodiments the composite comprises Cerium nanoparticles and mercapto-functionalized UiO-66, for example UiO-66-$(SH)_2$. In particular embodiments the composite comprises cerium oxide Me-NPs and mercapto-functionalized Zr-based MOF. In particular embodiments the composite comprises Cerium oxide nanoparticles and UiO-66. In particular embodiments the composite comprises Cerium oxide nanoparticles and mercapto-functionalized UiO-66, for example UiO-66-$(SH)_2$. In particular embodiments the composite comprises cerium dioxide Me-NPs and mercapto-functionalized Zr-based MOF. In particular embodiments the composite comprises Cerium dioxide nanoparticles and UiO-66. In particular embodiments the composite comprises Cerium dioxide nanoparticles and mercapto-functionalized UiO-66, for example UiO-66-$(SH)_2$. In other particular embodiments the composite consists of any of the previous combinations of Me-NPs and MOFs.

The particular structure of the composite material of the invention is derived from the specific method used for synthesizing said composite materials. The composite materials of the present invention are prepared by spray-drying a solution which contains the preformed Me-NPs and the precursors of the MOF, that is, the metal ions and organic ligands. When said solution is atomized in the spray-dryer at a certain temperature, MOF crystals rapidly form and agglomerate in the inside of the spray-dryer entrapping the Me-NPs, and the obtained composite material is simultaneously dried. The resulting composite is thus formed by a particulated superstructure (also herein referred as particle) of agglomerated MOF crystals that contains micropores, mesopores and macropores wherein the Me-NPs are located or "entrapped". Said superstructures or particles are usually in the form of beads.

The term "agglomerate" generally refers to random or orderly packing of individual MOF crystals in stable units (herein, the particles, usually in the form of beads). The particles of agglomerated crystals are not readily destroyed. For example, the agglomerates are stable in aqueous solution, even at high temperature, and are not destroyed by agitation or sonication.

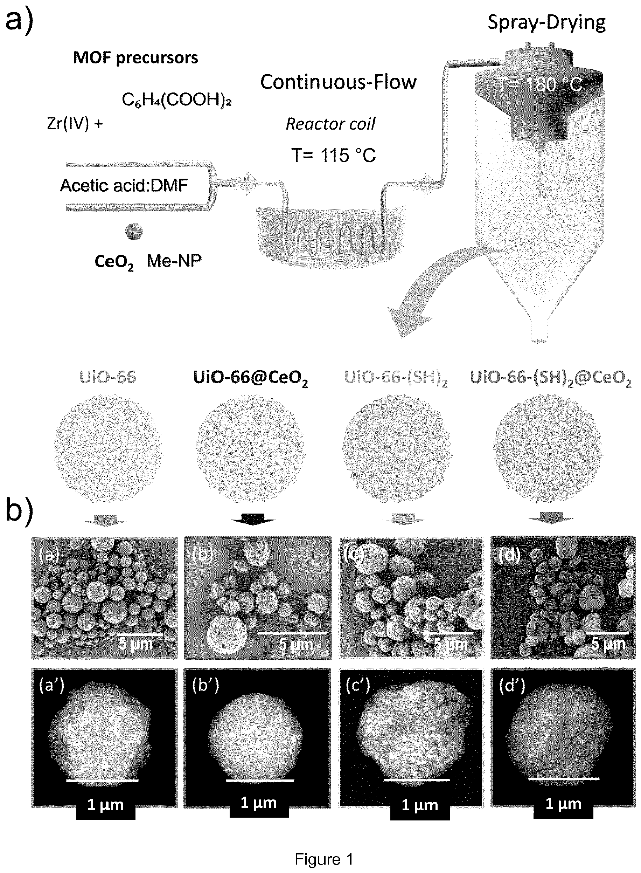

The preparation method of the composite material of the invention by continuous-flow-spray-drying is schematically shown in figure 1. The figure also shows a representation of the obtained composite material in the form of beads. Each bead is formed by MOF crystals that have agglomerated entrapping the Me-NPs within their pores. FESEM and TEM images of the beads are also shown.

Thus, in a particular embodiment, the composite material is obtainable by a method comprising spray drying Me-NPs with metal ions and an organic ligand which is at least bidentate in the presence of a solvent and collecting the dry composite material. The reaction of the metal ions and the organic ligand which is at least bidentate to form particles comprising agglomerated MOF crystals (usually in the form of beads), entrapment of the metal nanoparticles in the pores of the MOF particles and drying of the resulting composite material takes place simultaneously inside the spray dryer.

By "organic ligand which is at least bidentate" it is understood an organic compound that is able to bind at least two metal ions through coordination bonds.

The term "spraying" (also known as atomizing) refers to the process of forming a spray, which is a dynamic collection of drops dispersed in a gas.

A "spray dryer" is a device well known in the state of the art where a liquid input stream is sprayed in small droplets through a nozzle (or atomizer) into a hot gas stream.

The above synthetic method affords multiple advantages. As compared to other processes, the spray drying process greatly reduces the reaction time needed for the synthesis of the composites. The process also has the advantage that it directly produces dry composites out of the initial liquid reagents, thus avoiding a filtering step and further contributing to the efficiency of preparation.

The process employs mild conditions and can be performed in regular industrial spray dryer devices. Consequently, the process may be easily scaled-up to produce large quantities of composites in a very short time. Further, the process can be applied to a continuous or semi-continuous flow production process.

The Me-NPs for use in the present method for obtaining the composite material have been defined above.

Usually, the metal ion is provided in the form of a salt. Non-limiting examples of metal salts for use in the invention are nitrates, chlorides, sulphates, acetates, acetylacetonates, bromides, carbonates, tartrates and perchlorates.

In certain embodiments, MOF formation can take place by reacting more than one metal ion. In one embodiment the process of the invention is performed by reacting between one and six different metal ions. In another embodiment the process of the invention is performed by reacting between one and three different metal ions. In another embodiment the process of the invention is performed by reacting between one and two different metal ions. In other embodiments, the process is performed by reacting one metal ion, preferably that metal ion being Zr, in particular Zr(iv). In particular embodiments the metal is provided by Zr propoxide.

The organic ligands according to the invention can be bidentate, but also tridentate, tetradentate or pluridentate in the sense that they may coordinate two, three, four or multiple metal ions through coordination bonds. In one embodiment, the organic ligand coordinates between 2 and 20 metal ions. In a another embodiment, the organic ligand coordinates between 2 and 12 metal ions. In a another preferred embodiment, the organic ligand coordinates between 2 and 8 metal ions. The ability to coordinate metal ions is conferred by certain functional groups. Non-limiting functional groups that can be contained by the organic ligand to form a MOF are -COOH, -CSSH, -NO$_2$, -B(OH)$_2$,-SO$_3$H, -Ge(OH)$_3$, -Sn(OH)$_3$, -Si(SH)$_4$, -Ge(SH)$_4$, -Sn(SH)$_3$, -PO$_3$H, -AsO$_3$H, -AsO$_4$H,-P(SH)$_3$, As(SH)$_3$, C$_4$H$_2$O$_4$, -RSH, -RNH$_2$, -RNR-, -ROH, -RCN, -PO(OR)$_2$, -RN$_3$, where R is hydrogen, alkyl, alkylene, preferably C1, C2, C3, C4 or C5 alkylene, or aryl group, preferably comprising 1 or 2 aromatic nuclei.

In one embodiment, the at least one organic ligand which is at least bidentate contains functional groups selected from the group consisting of a carboxylate, a phosphonate, an amine, an azide, a cyanide, a squaryl, a heteroatom, and mixtures thereof. Preferred heterocycles contain O, S and/or N. Non-limiting examples of preferred heterocycles in the sense of the invention are azoles, pyridines and diazines.

The at least one organic ligand which is at least bidentate may be comprised of at least one functional group as mentioned above bound to any suitable organic compound, provided that it is ensured that the organic ligand is capable of coordinating at least two metal ions. In another embodiment, the at least one organic ligand which is at least bidentate is a monocarboxylic acid, a dicarboxylic acid, a tricarboxylic acid, a tetracarboxylic acid, imidazole, or mixtures thereof. In a preferred embodiment, the at least one organic ligand which is at least bidentate is selected from the group consisting of formic acid, acetic acid, oxalic acid, propanoic acid, butanedioic acid, terephthalic acid, (E)-butenedioic acid, benzene-1,4-dicarboxylic acid, benzene-1,3-dicarboxylic acid, benzene-1,3,5-tricarboxylic acid, 2-amino-1,4-benzenedicarboxylic acid, 2-bromo-1,4-benzenedicarboxylic acid, biphenyl-4,4'-dicarboxylic acid, biphenyl-3,3',5,5'-tetracarboxylic acid, biphenyl-3,4',5-tricarboxylic acid, 2,5-dihydroxy-1,4-benzenedicarboxylic acid, 1,3,5-tris(4-carboxyphenyl)benzene, (2E,4E)-hexa-2,4-dienedioic acid, 1,4-naphthalenedicarboxylic acid, naphthalene-2,6-dicarboxylate, pyrene- 2,7-dicarboxylic acid, 4,5,9,10-tetrahydropyrene-2,7-dicarboxylic acid, aspartic acid, glutamic acid, adenine, 4,4'-bypiridine, pyrimidine, pyrazine, 1,4-diazabicyclo[2.2.2]octane, pyridine-4-carboxylic acid, pyridine-3-carboxylic acid, imidazole, 1*H*-benzimidazole, 2-methyl-1*H*-imidazole, and 4-methyl-5-imidazolecarboxaldehyde. In another embodiment, the at least organic ligand which is at least bidentate is a peptide. In particular embodiments the organic ligand comprises at least two carboxylic functional groups. In some embodiments, the organic ligand is terephthalic acid.

The organic ligand to be used in the process of preparation of the composite material may be functionalized to incorporate additional chemical functional groups. In particular embodiments, the organic ligand is functionalized to incorporate mercapto functional groups. In a particular embodiment, the organic ligand is 2,5-dimercaptoterephthalic acid.

The process of the invention requires that a solvent is present for the reagents to form the composite material. The term "solvent" relates to individual solvents and also to mixtures of different solvents. The solvent can be any aqueous or non-aqueous solvent. In certain embodiments of the invention, mixtures of two or more solvents are used. In a preferred embodiment, the solvent is selected from the group consisting of water, (C1-C6)-alcohols, (C5-C7)-alkanes, alkenes, (C3-C8)-cycloalkanes, *N,N*-dimethyl formamide (DMF), *N,N*-diethyl formamide (DMF), dimethyl sulfoxide (DMSO), dioxane, chloroform, dichloromethane, diethyl ether, acetonitrile, toluene, benzene, tetrahydrofuran (THF), chlorobenzene, ethylene glycol, and mixtures thereof. In particular embodiments, the solvent is water. In other particular embodiments, the solvent is DMF. In other particular embodiments the solvent is a mixture of water and DMF.

There are several ways in which the reagents can be fed to the spray dryer with no apparent change in the obtained composite material. In one embodiment, a solution comprising all the reagents is sprayed into the spray dryer apparatus. The moment this solution is sprayed into the spray dryer the reaction and the drying takes place and dry composite materials are formed.

Alternatively, different solutions each containing a reagent or mixtures of the reagents can be simultaneously fed to the spray dryer through separate entrances (different nozzles or a three-fluid nozzle). Thus, in one embodiment, the process of the invention comprises simultaneously spraying more than one liquid solution containing the reagents.

In particular embodiments a solution containing all the reagents is pre-heated to a certain temperature. This may have the advantage of activating the reagents which form Secondary Building Units (SBU) which are more suitable starting points for synthesis of different types of MOF which are based in complex and large SBUs, such as oxoclusters in the case of UiO-66 series. In particular embodiments, the reagent-containing solution is preheated to a temperature from 70 °C to 150 °C, more particularly from 90 °C to 140 °C, more particularly from 95 to 120 °C, or from 105 to 125 °C, or from 110 to 120 °C, for example 111 °C, 112 °C, 113 °C, 114 °C, 115 °C, 116 °C, 117 °C, 118 °C, 119 °C. Thus, in particular embodiments the Me-NPs, metal ion and organic ligand are contacted in the presence of a solvent and subjected to a certain temperature. The contacting temperature may be as described above. The contacting time is usually from 20 to 110 s, or from 30 to 90 s, or from 40 to 80 s, or from 50 to 90 s, or from 50 to 70 s, or from 40 to 50 s, or from 50 to 60 s, or from 60 to 70 s, or from 70 to 80 s. In particular embodiments, the conditions for the activation step (pre-heating step) comprise a temperature from 100 to 130 °C and a time from 30 to 90 s. In other particular embodiments, the conditions for the pre-heating step comprise a temperature from 110 to 120 °C and a time from 30 to 90 s. The activation also has the advantage of improving crystallinity and specific surface area of the composite materials, which translates into higher adsorption capacity. Quite conveniently, the activation and spray-drying may be performed in continuous flow. For example, in one embodiment the reagent solution is introduced into a coil flow reactor at 100-130 °C and then directly atomized into the spray dryer.

Any regular spray dryer can be employed to produce dry composite material according to the invention. Preferably, large industrial spray dryers are used. Such industrial spray dryers can produce very large quantities of composites according to the present method in surprisingly short times. The spray dryer must have as many holes as are required for the spraying of the reactants, solvents and, optionally, the base. Usually, air is employed as the hot gas stream, however, other gases can be employed, such as nitrogen. Industrial spray dryers have large capacity drums for product collection. Preferably, the spray dryer drum is coupled to a powder-removing device. The device removes the formed composite powder at regular intervals, making place for newly synthesized composite, such that the production must not be regularly stopped to empty the drum. Thus, in a particular embodiment, the process for the preparation of a dry composite according to the invention is a continuous process.

The reaction temperature inside the spray dryer can be comprised from 50 to 250 °C, or from 80 to 230 °C, or from 80 to 210 °C, or from 80 to 200 °C, or from 100 to 230 °C, or from 100 to 200 °C, or from 150 to 200 °C, or from 120 to190 °C, or from 150 to 190 °C, or from 170 to 190 °C, for example 180 °C.

As mentioned above, the reaction time required for the preparation of composite materials for use in the process of the invention is surprisingly short. Usually, the reaction time is below 6 hours to obtain the dry product. Preferably, the reaction time is between 3 minutes and 4 hours, more preferably between 5 minutes and 4 hours, more preferably between 7 minutes and 3 hours, more preferably between 8 minutes and 2 hours, more preferably between 9 minutes and 1 hour, and still more preferably between 10 minutes and 30 minutes.

In some embodiments, the process of the invention also comprises the addition of a base. The base can sometimes further reduce the reaction time and/or the reaction temperature.

The base can be sprayed into the spray dryer together with the reagents, or it can be simultaneously sprayed through a different noozle, preferably the latter. In principle any base can be used in the method of the invention. However, preferred bases are selected from the group consisting of metal alkaline or earth alkaline hydroxides, amines, metal alkaline or earth alkaline carbonates, metal alkaline or earth alkaline acetates, pyridines, azoles, diazines, and mixtures thereof.

The composites obtained by the process described herein have a high purity grade. Nevertheless, the composites may be subjected to a purification step. Thus, in one embodiment, the process for the preparation of the composite material additionally comprises a purification step. Usually, this purification step comprises washing the composites coming out of the spray dryer with an appropriate solvent and drying. As non-limiting suitable solvents for the purification step the following can be mentioned: water, methanol, ethanol, isopropanol, heptane, hexane, pentane, cyclohexane, alkenes, DMF, DEF, DMSO, dioxane, chloroform, dichloromethane, diethyl ether, acetonitrile, toluene, benzene, THF, chlorobenzene, ethylene glycol, and mixtures thereof.

In a particular embodiment, the composite material is obtainable by a method comprising: a) contacting metal nanoparticles with Zr(iv) ions and an organic ligand which is at least bidentate in the presence of a solvent; b) pre-heating the mixture obtained from step a) to a temperature from 95 °C to 120 °C; c) spray drying the pre-heated mixture obtained from step b) at a temperature between 120 and 190 °C to yield dry composite material; and d) collecting the dry composite material. What happens is that the reaction of the Zr(iv) ions and the organic ligand which is at least bidentate to form the Zr-based MOF, agglomeration of the MOF crystals, entrapment of metal nanoparticles and the drying of the obtained composite material take place simultaneously inside the spray dryer.

In another particular embodiment, the composite material is obtainable by a method comprising: a) contacting metal nanoparticles with Zr propoxide and 2,5-dimercaptoterephthalic in the presence of a solvent; b) pre-heating the mixture obtained from step a) to a temperature from 110 °C to 120 °C; c) spray drying the pre-heated mixture obtained from step b) at a temperature between 175 and 185 °C to yield dry composite material; and d) collecting the dry composite material. The solvent is preferably DMF. The Me-NP is preferably $CeO_2$. The pre-heating temperature is preferably 115 °C. The spray drying temperature is preferably 180 °C.

The specific surface area for the composite materials obtained by this process is very high, which is convenient for use in the process of the invention. Further, the Me-NPs entrapped within the pores of the MOF particles retain their adsorption capabilities and synergically improve the MOF's ability to remove contaminants from water or aqueous solutions. Altogether, the process results in high-adsorptive composites that are very convenient materials for use in water purification or de-contamination.

The composite materials of the invention are usually in the form of particles in the shape of a rounded bead. Said rounded beads are usually spherical or substantially spherical. The size of the composite beads may range from a hundred nm to a few micras. In some embodiments the composite material are beads of size from about 0.1 μm to about 400 μm, for example from 0.1 μm to 20 μm or from 0.1 μm to 10 μm or from 0.5 to 5 μm or from 0.5 to 3 μm or from 0.5 to 2 μm, for example around 1 μm. As mentioned above, the size of the particles when said particles are spherical or substantially spherical, such as the composite beads, usually refers to the diameter. The size of the composite particles may refer to a distribution of sizes around the specified size. The size of the composite particles may be determined by methods well known in the state of the art.

The Field Emission Scanning Electron Microscope (FESEM) and Transmission Electron Microscopy (TEM) images of the composite beads of the invention are shown in figure 1. The resulting product has the advantage of possessing surprisingly high MOF particle density, in addition to intrinsically high specific surface area, which translates into higher adsorption capacity

The composite material of the invention typically contains from 0.5 to 25 wt. % of Me-NPs (wt. % refers to percentage by weight with respect to the total content of composite material). In other words, Me-NPs loading in the composite material is typically from 0.5 to 25 wt. % of the total content of composite material. In a particular embodiment the content of the metal nanoparticle in the total composite material is from 1 to 15 wt. % of the total content of composite material, or from 1 to 10 wt. % of the total content of composite material, or from 3 to 15 wt. % of the total content of composite material, or from 3 to 10 wt. % of the total content of composite material or from 1 to 7 wt. % of the total content of composite material, or from 3 to 7 wt. % of the total content of composite material, for example 1, 2, 3, 4, 5, 6 or 7 wt. % of the total content of composite material.

For reasons of completeness, various aspects of the invention are set out in the following numbered clauses:

Embodiment 1. A process for removing contaminants either from water or an aqueous solution comprising:

i) contacting either the water or the aqueous solution with a composite material comprising metal nanoparticles entrapped in the pores of agglomerated MOF crystals, and
ii) recovering the treated water or aqueous solution.

Embodiment 2. The process according to the preceding embodiment, wherein the MOF is a Zr-based MOF.

Embodiment 3. The process according to the preceding embodiment, wherein the Zr-based MOF MOF is selected from the group consisting of Zr-benzene-1,4-dicarboxylic acid (UiO-66), UiO-67, UiO-68, NU-1100, DUT-67, and MOF-808.

Embodiment 4. The process according to the preceding embodiment, wherein the Zr-based MOF is Zr-benzene-1,4-dicarboxylic acid (UiO-66).

Embodiment 5. The process according to any of the preceding embodiments, wherein the MOF is Zr-2,5-dimercaptoterephtalic acid.

Embodiment 6. The process according to the preceding embodiments, wherein the composite material is obtainable by spray drying Me-NPs with metal ions and an organic ligand which is at least bidentate in the presence of a solvent and collecting the dry composite material.

Embodiment 7. The process according to the preceding embodiment, wherein the composite material is obtainable by a method comprising:

a) contacting metal nanoparticles with metal ions and an organic ligand which is at least bidentate in the presence of a solvent;
b) pre-heating the mixture obtained from step a);
c) spray drying the pre-heated mixture obtained from step b) to yield the dry composite material; and
d) collecting the formed composite material.

Embodiment 8. The process according to any of the embodiments 6-7, wherein the reaction of the metal ions and the organic ligand which is at least bidentate to form the MOF crystals, agglomeration of the MOF crystals, entrapment of the metal nanoparticles in the pores of the agglomerated MOF crystals and drying of the resulting composite material takes place simultaneously inside the spray dryer.

Embodiment 9. The process according to any of the embodiments 6-8, wherein the metal ions are Zr ions.

Embodiment 10. The process according to the preceding embodiment, wherein the metal ions are Zr(iv) ions.

Embodiment 11. The process according to the preceding embodiment, wherein the metal ions are provided by zinc propoxide.

Embodiment 12. The process according to the preceding embodiment, wherein the organic ligand which is at least bidentate comprises at least two functional groups independently selected from the group consisting of a carboxylate, a phosphonate, an amine, an azide, a cyanide, a squaryl, a heteroatom, and mixtures thereof.

Embodiment 13. The process according to the preceding embodiment, wherein the organic ligand comprises at least two carboxylic functional groups.

Embodiment 14. The process according to the preceding embodiment, wherein the organic ligand is selected from the group consisting of a dicarboxylic acid, a tricarboxylic acid and a tetracarboxylic acid.

Embodiment 15. The process according to the preceding embodiment, wherein the organic ligand is selected from the group consisting of oxalic acid, butanedioic acid, terephthalic acid, benzene-1,4-dicarboxylic acid, benzene-1,3-dicarboxylic acid, benzene-1,3,5-tricarboxylic acid, 2-amino-1,4-benzenedicarboxylic acid, 2-bromo-1,4-benzenedicarboxylic acid, biphenyl-4,4'-dicarboxylic acid, biphenyl-3,3',5,5'-tetracarboxylic acid, biphenyl-3,4',5-tricarboxylic acid, 2,5-dihydroxy-1,4-benzenedicarboxylic acid, 1,3,5-tris(4-carboxyphenyl)benzene, (2E,4E)-hexa-2,4-dienedioic acid, 1,4-naphthalenedicarboxylic acid, naphthalene-2,6-dicarboxylate, pyrene- 2,7-dicarboxylic acid, 4,5,9,10-tetrahydropyrene-2,7-dicarboxylic acid, aspartic acid and glutamic acid

Embodiment 16. The process according to the preceding embodiment, wherein the organic ligand is terephthalic acid

Embodiment 17. The process according to any of the embodiments 6-16, wherein the organic ligand is mercapto-functionalized.

Embodiment 18. The process according to any of the embodiments 6-17, wherein the solvent is selected from the group consisting of water, methanol, ethanol, isopropanol, heptane, hexane, pentane, cyclohexane, alkenes, DMF, DEF, DMSO, dioxane, chloroform, dichloromethane, diethyl ether, acetonitrile, toluene, benzene, THF, chlorobenzene, ethylene glycol, and mixtures thereof.

Embodiment 19. The process according to the preceding embodiment, wherein the solvent is water, DMF or mixtures thereof.

Embodiment 20. The process according to the preceding embodiment, wherein the solvent is DMF.

Embodiment 21. The process according to any of the embodiments 6-20, wherein the spray drying is performed at a temperature from 80 to 230 °C.

Embodiment 22. The process according to the preceding embodiment, wherein the spray drying is performed at a temperature from 120 to 190 °C.

Embodiment 23. The process according to the preceding embodiment, wherein the spray drying is performed at 180 °C.

Embodiment 24. The process according to any of the embodiments 6-23, wherein the pre-heating temperature is from 80 to 150 °C.

Embodiment 25. The process according to the preceding embodiment, wherein the pre-heating temperature is from 95 °C to 120 °C.

Embodiment 26. The process according to the preceding embodiment, wherein the pre-heating temperature is 115 °C.

Embodiment 27. The process according to any of the embodiments 1-26, wherein the metal nanoparticles comprise aluminium, copper, iron, manganese, nickel, titanium, zinc, zirconium, cadmium, strontium or a compound of any of these elements.

Embodiment 28. The process according to the preceding embodiment, wherein the metal nanoparticles comprise aluminium oxide, copper oxide, iron oxide, manganese oxide, nickel oxide, titanium oxide, zinc oxide, zirconium oxide, hydrous ferric oxide, cadmium sulphide, iron sulphide, pyrite, pyrrhotite, strontium hydroxyapathite, magnetite or cerium oxide.

Embodiment 29. The process according to embodiment 27, wherein the metal nanoparticles comprise cerium or a compound thereof.

Embodiment 30. The process according to the preceding embodiment, wherein the metal nanoparticles comprise cerium dioxide.

Embodiment 31. The process according to the preceding embodiment, wherein the metal nanoparticles consist of cerium dioxide.

Embodiment 32. The process according to any of the embodiments 1-31, wherein the content of the metal nanoparticle in the total composite material is from 0.5 to 25 wt. % of the total content of composite material.

Embodiment 33. The process according to the preceding embodiment, wherein the content of the metal nanoparticle in the total composite material is from 3 to 10 wt. % of the total content of composite material.

Embodiment 34. The process according to any of the embodiments 1-33, that is for removing contaminants from water.

Embodiment 35. The process according to the preceding embodiment, that is for removing contaminants from industrial waste water, drinking water or urban waste water.

Embodiment 36. The process according to any of the embodiments 1-35, wherein the contaminants are heavy metals.

Embodiment 37. The process according to the preceding embodiment, wherein the contaminants are selected from the group consisting of arsenic, cadmium, chromium, mercury, copper and lead.

Embodiment 38. The process according to the preceding embodiment, that is for removing arsenic, cadmium, chromium, mercury, copper and lead.

Embodiment 39. The process according to embodiment 37, wherein the contaminants are selected from the group consisting of As(III), As(V), Cd(II), Cr(III), Cr(VI), Cu(II), Pb(II) and Hg(II).

Embodiment 40. The process according to the preceding embodiment, that is for removing As(III), As(V), Cd(II), Cr(III), Cr(VI), Cu(II), Pb(II) and Hg(II).

Embodiment 41. The process according to any of the preceding embodiments, wherein the composite material is in the form of a bead.

Embodiment 42. The process according to any of the preceding embodiments, wherein the composite material has a size from from 0.1 $\mu$m to 20 $\mu$m.

Embodiment 43. The process according to the preceding embodiment, wherein the composite material has a size from from 0.5 $\mu$m to 5 $\mu$m.

Embodiment 44. A composite material comprising $CeO_2$ nanoparticles entrapped in the pores of agglomerated Zr-benzene-1,4-dicarboxylic acid crystals.

Embodiment 45. A composite material comprising $CeO_2$ nanoparticles entrapped in the pores of agglomerated Zr-2,5-dimercaptoterephtalic acid crystals.

Embodiment 46. The composite material according to any of the embodiments 44-45, that is in the form of a bead.

Embodiment 47. The composite material according to any of the embodiments 44-46, that has a size from from 0.1 $\mu$m to 20 $\mu$m.

Embodiment 48. The composite material according to the preceding embodiment, wherein the composite material has a size from from 0.5 $\mu$m to 5 $\mu$m.

Embodiment 49. An absorbing material comprising the composite material as defined in any of the embodiments 44-48.

Embodiment 50. The absorbing material according to the preceding embodiment that is selected from the group consisting of a membrane, a filter or a sponge.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples and drawings are provided by way of illustration, and they are not intended to be limiting of the present invention. Furthermore, the present invention covers all possible combinations of particular and preferred embodiments described herein.

**Examples**

**MATERIALS AND METHODS**

Materials: Zirconium (IV) propoxide solution 70 wt. % in 1-propanol, cerium (III) nitrate, sodium meta arsenite, sodium arsenate dibasic heptahydrate, cadmium (II) nitrate tetrahydrate, chromium (III) nitrate nonahydrate, chromium (VI) oxide, copper (II) nitrate hemi(pentahydrate), lead (II) nitrate, mercury (II) chloride, terephthalic acid, diethyl 2,5-dihydroxyterephthalate, polyvinylpyrrolidone (M.W 10,000) 1,4-diazabicyclo[2.2.2]octane, dimethylthiocarbomoyl chloride and hexamethylenetetramine were purchased from Sigma Aldrich. N,N-dimethylformamide, methanol and acetone was purchased from Fischer Scientific. All the reagents were used without further purification. Deionized water, obtained with a Milli-Q® system (18.2 M$\Omega$ cm), was used in all adsorption experiments. 2,5-dimercaptoterepthalic acid was synthesized according to a reported procedure.33 X-ray powder diffraction (XRPD) patterns were collected on an X'Pert PRO MPDP analytical diffractometer (Panalytical) at 45 kV and 40 mA using CuK$\alpha$ radiation ($\lambda$ = 1.5419 Å). Nitrogen adsorption and desorption measurements were performed at 77 K using an Autosorb-IQ-AG analyzer (Quantachrome Instruments). Field-emission scanning electron microscopy (FESEM) images were collected on a FEI Magellan 400 L scanning electron microscope at an acceleration voltage of 5.0 KV and a FEI Quanta 650F scanning electron microscope at an acceleration voltage of 20.0 KV, using aluminium as a support. Inductively Coupled Plasma - Optical Emission Spectroscopy (ICP-OES) measurements were performed using an ICP-OES Perkin-Elmer, model Optima 4300DV.

Synthesis of $CeO_2$ nanoparticles: Equal volumes of $Ce(NO)_3$ (75 mL, 0.04 M) and hexamethylenetetramine (75 mL, 0.50 M) aqueous solutions were mixed at room temperature and the obtained solution was aged at 25°C for 48 h under mild stirring. Me-NPs were formed by oxidation of Ce(III) to Ce(IV) at alkaline conditions and the subsequent formation of the insoluble specie $CeO_2$. 4 g of polyvinylpyrrolidone (PVP, M.W 10,000) in 200 ml of water was added dropwise to the Me-NP solution while stirring and the flask was left to rest overnight at room temperature. Then, 800 ml of acetone was added to the Me-NP solution and left 24 hours at room temperature without stirring for precipitation of the Me-NPs. After removing the supernatant by decantation, Me-NPs were washed three times with DMF and finally, redispersed in DMF to give a colloidal solution of $CeO_2$ Me-NPs with a concentration of 1 mg/ml. The average size of synthesized $CeO_2$ Me-NPs was 12 $\pm$ 2.5 nm

Synthesis of 2,5-dimercaptoterephthalic acid (SH-TPA): A solution of diethyl 2,5-dihydroxyterephthalate (0.08 mol, 20 g) in 300 mL of degassed DMF was introduced into a 500 mL three neck round bottom flask under Ar atmosphere and cooled down to 0° C, 1,4-diazabicyclo[2.2.2]octane (DABCO) (0.31 mol, 35.2 g) was added under magnetic stirring and left stirring for 10 minutes. dimethylthiocarbomoyl chloride (0.32 mol, 39 g) is then slowly added to the mixture and the suspension is allowed to warm up to room temperature and stirred for 24 hours under Ar atmosphere. The product is precipitated with 500 mL water, filtered and washed extensively with water (yield: 31 g, 95%). The diethyl 2,5-bis[(dimethylcarbamothioyl)oxy]terephthalate obtained is dried and stored under Ar atmosphere until the next step. 3.25 g (8 mmol) of the previously obtained product are heated under Ar atmosphere at 215 °C for 1 hour. The resulting brown paste was cooled down to 70 °C and dissolved in 100 mL of EtOH. Fine brown crystals appeared as the solution was cooled down to room temperature. The crystals were filtered off yielding Diethyl 2,5-bis(dimethylthiocarbamoylsulfanyl)terephthalate (yield: 2.75 g, 85%). A solution of the previously obtained product (6 mmol, 2.6 g) in degassed 1.3 M solution of KOH in EtOH:$H_2O$ (1:1, 80 mL) is refluxed for 3 hours under Ar atmosphere. The reaction mixture is cooled down to 0° C and HCl (37% w/w, 30 mL) is added slowly. The precipitated SH-TPA is collected by filtration, washed extensively with water, dried under dynamic vacuum and stored under Ar until use (yield: 1.294 g, 93%). Confirmation we obtained the desired product was carried out through H-NMR (result not shown).

Synthesis of UiO-66, UiO-66@$CeO_2$, UiO-66-$(SH)_2$ and UiO-66-$(SH)_2$@$CeO_2$: All materials were synthesized by the spray-drying technique. Briefly terephthalic acid (TPA) (0.6 mmol, 100 mg), glacial acetic acid (3 mL), $CeO_2$ Me-NPs in N,N-dimethylformamide (DMF) solution (concentration = 1 mg/mL; 8.5 mL) and zirconium (IV) propoxide solution 70 wt. % in 1-propanol (Zr(OPrn)$_4$) (0.5 mmol, 280 $\mu$L) were sequentially added in a flask containing 40 mL of DMF. The resulting mixture was injected into a coil flow reactor (inner diameter: 3 mm) with a feed rate of 2.4 mL/min at 115 °C. The resulting pre-heated solution was then spray-dried at 180 °C at a flow rate of 336 mL/min using a B-290 Mini Spray-Dryer (BUCHI Labortechnik) with a 0.5 mm diameter hole spray cap. The resulting solid was dispersed in DMF and washed twice with DMF and ethanol. Entrapment efficiency was calculated based on the initial amount of Me-NPs in the precursors solution(8.5 mg), the final mass of the product after washing (212 mg) and the $CeO_2$ content determined by ICP-OES and was found out to be 4.0 % wt./wt. for the UiO-66@$CeO_2$ composite. The thiolated materials were synthetized following the same procedure substituting the TPA for SH-TPA in the proportional molar ratio and plain DMF instead of a $CeO_2$ Me-NPs dispersion when appropriate. The entrapment efficiency for $CeO_2$ INPs for the UiO-66-$(SH)_2$@$CeO_2$ composite was calculated to be 3.3 % wt./wt.

Pollutant adsorption studies.

Preliminary metal adsorption evaluation: The adsorption of metal pollutants was examined by a batch method. Typically, 10 mg of UiO-66, UiO-66@$CeO_2$, UiO-66-$(SH)_2$ or UiO-66-$(SH)_2$@$CeO_2$ were loaded into 50 mL falcon centrifugation tubes with 30 mL of a 10 parts per billion (ppb), 100 ppb or 1000 ppb aqueous metal ion solution of As(III). The falcon tubes were sonicated for 2 minutes to ensure a homogeneous dispersion and agitated for 3 hours at 30 rpm in a rotary agitator at room temperature. After adsorption the samples were centrifuged and the supernatant collected through a 200 $\mu$m syringe filter for ICP-OES analysis. The experiment was repeated again with a adsorption time of 24 hours.

Low concentration adsorption: Low pollutant concentration adsorption was carried out using a similar procedure based on the data obtained in the experiment above. Typically, 1 or 10 mg of UiO-66, UiO-66@$CeO_2$, UiO-66-$(SH)_2$ or UiO-66-$(SH)_2$@$CeO_2$ and the physical mixture of the materials with and without nanoparticles were loaded into 50 mL falcon centrifugation tubes with 30 mL of a 10 ppb aqueous metal ion solution (As(III), As(V), Cd(II), Cr(III), Cr(VI), Cu(II), Pb(II) and Hg(II)). The falcon tubes were sonicated for 2 minutes to ensure a homogeneous dispersion and agitated for 3 hours at 30 rpm in a rotary agitator at room temperature. After adsorption the samples were centrifuged, the supernatant collected through a 200 $\mu$m syringe filter and stored at 4 °C in the dark until ICP-OES analysis.

River sample adsorption: Similarly to previous procedures, 1 mg of UiO-66, UiO-66@$CeO_2$, UiO-66-$(SH)_2$ or UiO-66-$(SH)_2$@$CeO_2$ were loaded into 50 mL falcon centrifugation tubes with 30 mL sample of water from the Bone, Buringanga and Sarno river sample that was previously acidified (pH=5) to dissolve any suspended sediment. The falcon tubes were sonicated for 2 minutes to ensure a homogeneous dispersion and agitated for 3 hours at 30 rpm in a rotary agitator at room temperature. After adsorption the samples were centrifuged and the supernatant collected after passing it through a 200 $\mu$m syringe filter to be analyzed by ICP-OES. The experiments were all repeated at the natural pH of the river water. In all cases the collected supernatants were stored at 4 °C in the dark until ICP-OES analysis.

Material stability assessment: XRPD were performed on all materials before and after the adsorption experiments to ascertain the retention of their crystallinity. Zr ion ICP-OES analysis of the supernatants were also carried out to certify no leaching/degradation of our material was occurring under adsorption conditions.

Continuous flow adsorption: As a test to evaluate the viability of the material to be used in a continuous flow system was carried out. Briefly, 10 mg of UiO-66-$(SH)_2$@$CeO_2$ was loaded into a glass column capped with cotton wool. 30 mL of a solution containing 100 ppb of As(III), As(V), Cd(II), Cr(III), Cr(VI), Cu(II), Hg(II), and Pb(II) ions was passed through with a flow of 1.3 mL/min. The filtered metal solution was collected and analyzed through ICP-OES analysis.

Uptake calculations: The maximum uptake capacity for each sample was calculated as:

$$L_M = \frac{C_0 \times V}{M}$$

Where "$C_0$" was the initial concentration of the solution, "$V$" the volume loaded into the falcon and "$M$" the mass of MOF used for the adsorption.

The pollutant loaded amount for each sample was calculated as:

$$L = \frac{(C_0 - C_f) \times V}{M}$$

Where "$C_f$" was the measured concentration.

The percentage adsorbed for each sample was calculated as follows:

$$\%Adsorption = \frac{L}{L_M} \times 100$$

**RESULTS**

<u>Synthesis and characterization</u>: The MOF and MOF@CeO$_2$ beads were all synthetized using a continuous-flow-spray-drying methodology as previously reported. In summary, solutions with the necessary MOF precursors (with dispersed CeO$_2$ Me-NPs when doing the Me-NPs composite) where simultaneously atomized using a mini spray-dryer. Note here that this versatile technique allows for, in a continuous flow, the simultaneous MOF formation and entrapment of suspended nanoparticles into the beads superstructures of complex samples. Furthermore, this technique allows to work in a continuous mode requiring only a continuous stream of fresh reagent solution, making it a highly scalable technique. After 15 minutes of continuous spraying the obtained dry powders were washed and dried in an oven overnight. Using this technique, we synthetized UiO-66 and UiO-66 with encapsulated CeO$_2$ as well as its thiol functionalized relatives UiO-66-(SH)$_2$ and UiO-66-(SH)$_2$@CeO$_2$. (Figure 1-a) X-ray powder diffraction (XRPD) analysis of the as synthetized powder confirmed the formation of the UiO-66 framework (results not shown). BET analysis was performed to all product powders. The results show a decrease in porosity with the CeO$_2$ composites which was to be expected since introducing dense non-porous materials inside the MOF particles. To assess the stability of our composites XRPD were performed to all materials before and after metal capture adsorption (results not shown). No significant loss of signal was observed after adsorption, confirming the MOFs were stable under working conditions. The incorporation of the CeO$_2$ Me-NPs inside the MOF composite was confirmed through Field Emission Scanning Electron Microscope (FESEM) and Transmission Electron Microscopy (TEM) imaging (Figure 1-b). The quantification of the CeO$_2$ Me-NPs loading (entrapment) was carried out through Inductively coupled plasma atomic emission spectroscopy (ICP-AES) after digesting the samples with 5% HF overnight and analysing the filtered supernatant, turning out to be 4.0% wt./wt. for the UiO-66@CeO$_2$ and 3.3% wt./wt. for the UiO-66-(SH)$_2$@CeO$_2$ composite.

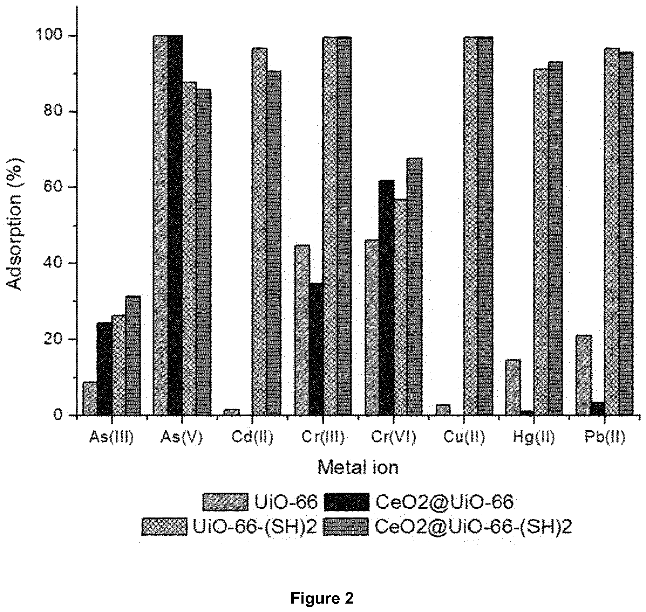

<u>Material adsorption properties study</u>: To get a first impression of the concentration ranges and adsorption times of the MOF materials, a preliminary adsorption test was carried out with As(III) solutions of different concentrations (10, 100 and 1000 ppb of As(III), pH=5 and a MOF concentration of 0.3 mg/mL) and adsorption times (3 and 24 hours). In 3 hours the material had reached close to the same adsorption values than the uptakes at 24 hours in all concentration ranges (results not shown). Since in purification plants the more reasonable use for adsorption materials is as a follow-up treatment to a previous chemical precipitation, it was deemed that faster adsorption times in relatively low concentration samples would be more realistic for the study. Follow up adsorption experiments were made in these chosen conditions: 3 hours uptake, 100 ppb concentration of the metal ion, pH = 5 and a MOF material concentration of 0.03 mg/mL. A pH = 5 was chosen to avoid the precipitation of any of the studied metal pollutants, and since it is a good compromise between metal ion solubility and feasibility of incorporation in water treatment plants. In addition, as well as falling inside the usual pH range of other adsorptive studies. The chosen ions for this study were some of the more prevalent heavy metal pollutants present in industrial wastewater: As(III and V), Cd(II), Cr(III and VI), Cu(II), Pb(II) and Hg(II). Looking at the results (Figure 2) some clear trends can be elucidated; a positive influence can be observed of the pending thiol groups in the SH-decorated UiO-66 materials since they have significantly higher metal uptakes. To assure no Zr ions were being substituted by any of the studied heavy metal pollutants ICP-OES analyses of Zr were performed to all supernatant of our experiments after adsorption. No amount of Zr was found above the detection limit in any of our experiments confirming the stability of the MOFs. The positive activity of the CeO$_2$ Me-NPs can be observed in particular with As(III) and Cr(VI). As(III) and Cr(VI) are regarded as highly toxic and, especially in the case of Cr(VI), with high mobility making them a high priority target for removal when present in industrial wastewater. Coincidently, these two metal pollutants are the ones the MOF materials have a harder time capturing with uptakes slightly lower than their peer contaminants and where the help from the CeO$_2$ Me-NPs is more significant.

<u>Synthetic river water adsorption</u>: Once demonstrated the efficacy of the composite materials a further step in the study was to apply it to real cases of contaminated water. Three uptake experiments where performed with river water samples, two were made synthetically from pollution reports of the rivers Bone (Indonesia) and Buringanga (Bangladesh) for their high heavy metal contamination, significant to this study, and a third sample taken directly from the Sarno river (Italy). The adsorption experiments were performed following the same procedure as in the previous experiments (3 hours uptake MOF material concentration 0.03 mg/mL) both previously acidifying the river water to pH = 5 and at the natural pH of the river water. The Bone and Buringanga rivers are both heavily polluted with several metal ions above the W.H.O. standards (table 1).

| Metal pollutant | Bone river pollutants before adsorption (ppb) | Bone river pollutants after adsorption (ppb) | Buringanga river pollutants before adsorption (ppb) | Buringanga river pollutants after adsorption (ppb) | W.H.O drinking water standards (ppb) |
|---|---|---|---|---|---|
| As | 122 | 46 (63%)[1] | - | - | 50 |
| Cd | - | - | 66 | 1 (99%)[2] | 5 |
| Cr | - | - | 105 | 33 (69%)[2] | 50 |
| Cu | - | - | 243 | 2 (99%)[3] | 1000 |
| Hg | 46‡ | 6 (88%)[1] | - | - | 1 |
| Pb | 157 | <0,25 (99,9%)[3] | 98 | <0,25 (99,9%)[3] | 10 |

**Table 1**. Maximum heavy metal concentration permitted by the W.H.O. and concentrations before and after adsorption of the Bone and Buringanga rivers. Adsorption percentage of the best performing material in parenthesis ("1" corresponds to UiO-66, "2" corresponds to UiO-66-(SH)$_2$ and "3" corresponds to UiO-66-(SH)$_2$@CeO$_2$)

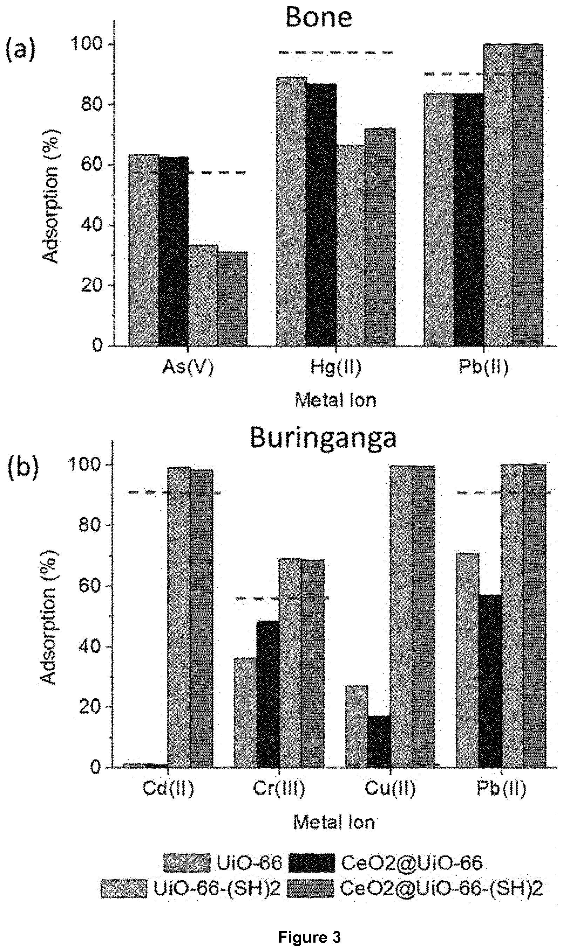

In general, the thiol decorated material outperformed the non thiolated, while including CeO$_2$ nanoparticles further enhanced performance for some heavy metals, in particular Cr(VI) and As(III). After the adsorption the UiO-66-(SH)$_2$@CeO$_2$ composite material was able to remove more than 99% of the Cd, Cu and Pb ions and 69% of the Cr ions (Figure 3-b) at the pH of the Buringanga river (6.95) leaving in the supernatant concentrations of pollutants all below the W.H.O. standards. At pH = 5 the UiO-66-(SH)$_2$@CeO$_2$ composite material removed more than 98% of the Cr, Cu and Pb ions and around 66% of the Cd. For the Bone river sample at its natural pH of 7.53 the UiO-66-(SH)$_2$@CeO$_2$ composite material removed more than 99.9% of the Pb ions and the UiO-66 (non-thiolated) materials 62% and 87% of the As and Hg pollutants respectively. The obtained results leave a supernatant with As and Pb ions of 46 and <0.1 ppb which are both below the W.H.O. standards, and 6 ppb of Hg that, while above the permitted concentration, it is believed is in the form of a Hg(OH)$_2$ dispersion which could be easily removed through other means such as membrane filtration. The adsorption at pH = 5 removed 98% and 99% of the Hg and Pb ions leaving a purified water with 2.5 and 1 ppb of respectively. The obtained results show that the materials work well at the natural pH of the river water, simplifying their adaptation to a continuous flow remediation system. The composite materials managed to reduce all pollutants below the W.H.O. standards with the exception of Hg that is believed exists in the form of a hydroxide suspension, which could be removed through other means (eg. flocculation, filtration, etc.). It is also worth noting that the composites managed to purify the synthetized river waters with a composite concentration of only 0.03 mg/mL straight from the reported pollution values, when normally adsorption treatments are carried out after a previous chemical treatment (precipitation, flocculation, electrodeposition, etc.) further accentuating the effectivity of said composite materials.

Real river water adsorption: A purification experiment was also performed on a real sample of the Sarno river. Compared to the synthetic river samples the Sarno water was much less polluted (table 2) with the concentration of Cd(II) Pb(II) and Hg(II) ions below the detection limit. Even with the low metal concentrations, the UiO-66-(SH)$_2$@CeO$_2$ composite was able to remove completely all copper ions (table 2) as well as 54% of the arsenic pollutant even at the extremely low pollutant concentration present.

| Metal pollutant | Sarno River pollutant before adsorption (ppb) | Sarno River pollutant after adsorption (ppb) | W.H.O. drinking water standards (ppb) |
|---|---|---|---|
| As | 0.93 | 0.42 (54,7) | 50 |
| Cd | < 0.25 | - | 5 |
| Cr | 11 | 6,9 (37,3) | 50 |
| Cu | 3.2 | <0,25 (99,9%) | 1000 |
| Hg | < 0,25 | - | 1 |
| Pb | < 0,25 | - | 10 |

**Table 2** Maximum heavy metal concentration permitted by the W.H.O. and concentrations before and after adsorption of the Sarno river. In parenthesis is the adsorption percentage of the best performing material.

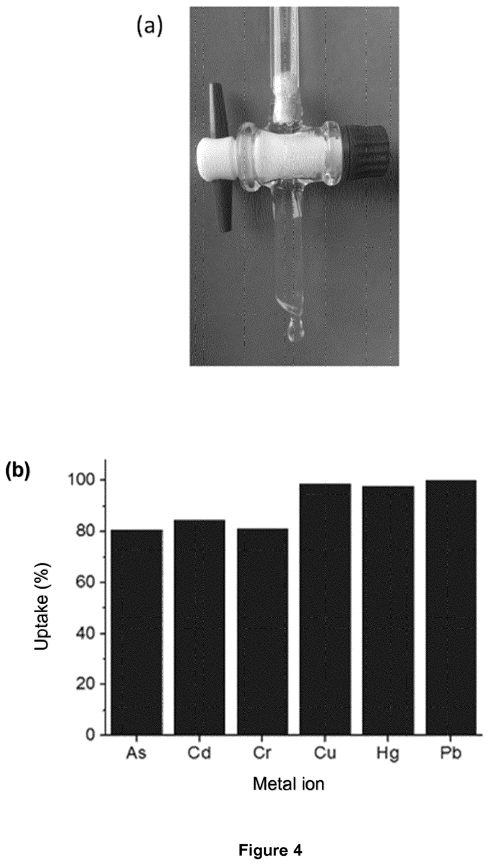

Continuous flow adsorption: As a proof of concept, a continuous flow purification system was developed based on the UiO-66-(SH)$_2$@CeO$_2$ composite which consisted in a packed MOF powder bed inside a glass column were liquid could continuously flow through (Figure 4-a). 30 mL water solutions containing 100 ppb of all the previously analysed metal ions were filtered through a 10 mg MOF powder bed at a rate of 1.3 mL/min. ICP-OES analysis was then performed on the purified filtrate, which revealed the removal of 99.9%, 98% and 99% of Pb, Hg and Cu ions respectively as well as adsorptions above 80% for the remaining ions (figure 4-b).

**CONCLUSIONS**

Composite materials based on the UiO-66 family MOF decorated with thiol groups and CeO$_2$ nanoparticles were prepared by continuous spray drying. These composite materials were used to study the removal of some of the most prevalent water pollutants in industrial wastewater with high cleansing efficiency. The composite materials were also applied to river-water polluted samples to evaluate their water remediation capabilities. The composite materials were successfully incorporated into a continuous-flow cleaning system in the form of a packed powder column capable of remediating a stream of water without previous treatments. The UiO-66-(SH)$_2$@CeO$_2$ composite materials show a convenient compromise between net adsorptive ability and versatility at different conditions regarding heavy metal uptake, generally outperforming the UiO-66 MOFs devoid CeO$_2$ nanoparticles and the non-thiolated materials. This demonstrates great potential of the disclosed composites for environmental applications, such as water purification.

**Citation List**

Zhang et al in Journal of Applied Physics, Volume 95, Issue 8, pp. 4319-4326 (2004)
Zhang et al in Appl. Phys. Lett., Volume 80, pp. 127-129 (2002).

**Claims**

1.   A process for removing contaminants either from water or an aqueous solution comprising:

    i) contacting either the water or the aqueous solution with a composite material comprising metal nanoparticles entrapped in the pores of agglomerated Zr-based MOF crystals, and
    ii) recovering the treated water or aqueous solution.

2. The process according to cla im 1, wherein the Zr-based MOF is a mercapto-functionalized Zr-MOF.

3. The process according to any of the claims 1-2, wherein the Zr-based MOF is selected from the group consisting of Zr-benzene-1,4-dicarboxylic acid (UiO-66), Zr-4,4'-biphenyldicarboxyilic acid (UiO-67), Zr-terphenyldicarboxylic acid (UiO-68), Zr-4-[2-[3,6,8.tris[2-(4-carboxyphenyl)ethynyl]-pyren-1-yl]ethynyl]benzoic acid (NU-1100), (Zr-tiphenedicarboxylic acid) (DUT-67), and Zr-1,3,5-benzenetricarboxylic acid (MOF-808).

4. The process according to claim 3, wherein the Zr-based MOF is Zr-benzene-1,4-dicarboxylic acid (UiO-66).

5. The process according to any of the claims 1-4, wherein the composite material is obtainable by a method comprising:

   a) contacting metal nanoparticles with $Zr^{4+}$ ions and an organic ligand which is at least bidentate in the presence of a solvent;
   b) pre-heating the mixture obtained from step a) to a temperature from 95 °C to 120 °C;
   c) spray drying the pre-heated mixture obtained from step b) at a temperature from 120 to 190 °C to yield the dry composite material; and
   d) collecting the formed composite material.

6. The process according to claim 5, wherein the solvent is water, DMF or mixtures thereof.

7. The process according to any of the claims 5-6, wherein the organic ligand is mercapto-functionalized.

8. The process according to any of the claims 5-7, wherein the organic ligand comprises at least two carboxylic functional groups.

9. The process according to any of the claims 5-8, wherein the $Zr^{4+}$ ions are provided by Zr propoxide, the organic ligand is 2,5-dimercaptoterephthalic acid and the solvent is DMF.

10. The process according to any of the claims 1-9, wherein the metal nanoparticle comprises cerium oxide.

11. The process according to any of the claims 1-10, wherein the content of the metal nanoparticle in the total composite material is from 3 to 15 wt. % of the total content of composite material.

12. The process according to any of the claims 1-11, wherein the composite material is in the form of a bead with size from from 0.1 $\mu$m to 20 $\mu$m.

13. The process according to any of the claims 1-12, wherein the contaminants are heavy metals, preferably selected from the group consisting of arsenic, cadmium, chromium, mercury, copper or lead.

14. A composite material comprising $CeO_2$ nanoparticles entrapped in the pores of agglomerated Zr-2,5-dimercaptoterephtalic acid crystals.

15. An absorbing material, preferably a membrane, filter or sponge, comprising the composite material as defined in claim 14.

16. The composite material according to claim 14 or the absorbing material according to claim 15, wherein the composite material is in the form of a bead with size from from 0.1 $\mu$m to 20 $\mu$m.

Figure 1

**Figure 2**

Figure 3

(a)

(b)

Figure 4

Europäisches
Patentamt

European
Patent Office

Office européen
des brevets

# EUROPEAN SEARCH REPORT

Application Number

EP 19 38 2968

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/160348 A1 (SIU PAUL WAI-MAN [US] ET AL) 9 June 2016 (2016-06-09) | 1 | INV.<br>B01J20/06<br>B01J20/22 |
| Y | * paragraphs [0031], [0049] - [0051], [0053] - [0055] *<br>* figure 1D *<br>* claims 32,34 *<br>----- | 2-16 | B01J20/28<br>B01J20/30<br>C02F1/28 |
| X | LIJIN HUANG ET AL: "A mercapto functionalized magnetic Zr-MOF by solvent-assisted ligand exchange for Hg 2+ removal from water",<br>JOURNAL OF MATERIALS CHEMISTRY A,<br>vol. 4, no. 14,<br>1 January 2016 (2016-01-01), pages 5159-5166, XP055688772,<br>GB<br>ISSN: 2050-7488, DOI: 10.1039/C6TA00343E | 1 | |
| Y | * abstract *<br>* 2.3. Preparation of MFCs;<br>page 5160, right-hand column - page 5161, left-hand column *<br>* table 3 *<br>* figure 8 *<br>* 3.3 Selectivity of MFC-S for Hg2+;<br>page 5163, right-hand column *<br>----- | 2-16 | |

TECHNICAL FIELDS
SEARCHED      (IPC)

B01J
C02F

-/--

The present search report has been drawn up for all claims

| Place of search | Date of completion of the search | Examiner |
|---|---|---|
| The Hague | 23 April 2020 | Kaluza, Nicoleta |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 1 of 3

Europäisches
Patentamt

European
Patent Office

Office européen
des brevets

**EUROPEAN SEARCH REPORT**

Application Number

EP 19 38 2968

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | OLIVERA SHARON ET AL: "Cerium dioxide and composites for the removal of toxic metal ions", ENVIRONMENTAL CHEMISTRY LETTERS, SPRINGER-VERLAG, HEIDELBERG, DE, vol. 16, no. 4, 8 May 2018 (2018-05-08), pages 1233-1246, XP036641082, ISSN: 1610-3653, DOI: 10.1007/S10311-018-0747-2 [retrieved on 2018-05-08] * abstract * * Potential role of cerium-based oxides and composites in contaminant remediation; page 1235, right-hand column - page 1236, left-hand column * | 14-16 | |
| L | KA-KIT YEE ET AL: "Effective Mercury Sorption by Thiol-Laced Metal-Organic Frameworks: in Strong Acid and the Vapor Phase", JOURNAL OF THE AMERICAN CHEMICAL SOCIETY, vol. 135, no. 21, 7 May 2013 (2013-05-07), pages 7795-7798, XP055448946, US ISSN: 0002-7863, DOI: 10.1021/ja400212k * L: This document completes the disclosure of D1 with respect of removal of contaminants from other streams, water or aqueous solutions.; the whole document * | 1 | TECHNICAL FIELDS SEARCHED (IPC) |

-/--

The present search report has been drawn up for all claims

| Place of search | Date of completion of the search | Examiner |
|---|---|---|
| The Hague | 23 April 2020 | Kaluza, Nicoleta |

EPO FORM 1503 03.82 (P04C01)

Europäisches
Patentamt

European
Patent Office

Office européen
des brevets

**EUROPEAN SEARCH REPORT**

Application Number

EP 19 38 2968

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | GERARD BOIX ET AL: "MOF-Beads Containing Inorganic Nanoparticles for the Simultaneous Removal of Multiple Heavy Metals from Water", ACS APPLIED MATERIALS & INTERFACES, vol. 12, no. 9, 6 February 2020 (2020-02-06), pages 10554-10562, XP055687806, US ISSN: 1944-8244, DOI: 10.1021/acsami.9b23206 * the whole document * ----- | 1-16 | |

TECHNICAL FIELDS
SEARCHED        (IPC)

The present search report has been drawn up for all claims

| Place of search | Date of completion of the search | Examiner |
|---|---|---|
| The Hague | 23 April 2020 | Kaluza, Nicoleta |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 819 026 A1**

## ANNEX TO THE EUROPEAN SEARCH REPORT
## ON EUROPEAN PATENT APPLICATION NO.

EP 19 38 2968

This annex lists the patent family members relating to the patent documents cited in the above-mentioned European search report.
The members are as contained in the European Patent Office EDP file on
The European Patent Office is in no way liable for these particulars which are merely given for the purpose of information.

23-04-2020

| Patent document cited in search report | Publication date | Patent family member(s) | Publication date |
|---|---|---|---|
| US 2016160348 A1 | 09-06-2016 | CN 107107028 A<br>EP 3227017 A2<br>JP 2018500157 A<br>KR 20170091655 A<br>TW 201630658 A<br>US 2016160348 A1<br>WO 2016090048 A2 | 29-08-2017<br>11-10-2017<br>11-01-2018<br>09-08-2017<br>01-09-2016<br>09-06-2016<br>09-06-2016 |

EPO FORM P0459

For more details about this annex : see Official Journal of the European Patent Office, No. 12/82

24

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHANG et al.** *Journal of Applied Physics,* 2004, vol. 95 (8), 4319-4326
- *Appl. Phys. Lett.,* 2002, vol. 80, 127-129
- *CHEMICAL ABSTRACTS,* 1072413-80-9
- **ZHANG et al.** *Appl. Phys. Lett.,* 2002, vol. 80, 127-129